# EUROPEAN PATENT APPLICATION

(11) **EP 0 979 720 A1**
(43) Date of publication of application: **16.02.2000**
(21) Application number: 98830494.5
(22) Date of filing: 10.08.1998
(51) Int. Cl.: B29C 49/42, B65G 47/90

(54) **Adjustable automatic transport system for bottle blowing machines**

(71) Applicant: Sasib Beverage Machinery M.S. S.p.A., 43015 Noceto (Parma) (IT)
(72) Inventor: Panzetti, Luigi, 43100 Parma (IT)
(74) Representative: Maggioni, Claudio

(57) **Abstract**

The present invention relates to an automatic adjustable transport system designed particularly for machines for blowing bottles in thermoplastic materials such as for example PET (polyethylene terephthalate).

In particular, the present invention relates to a linear transport system for objects, comprising a bracket (5) that is movable both in a transverse direction and a longitudinal direction with respect to the direction of arrival of the said objects, characterized in that the said bracket (5) supports a plurality of movable gripping forks (3; 19) and in that the said transport system comprises means for moving the said gripping forks (3; 19) individually and/or with a mutual action so as to vary the distance between their axes.

## Description

The present invention relates to an automatic adjustable transport system designed particularly for machines for blowing bottles in thermoplastic materials such as for example PET (polyethylene terephthalate).

Blowing machines turn bottle preforms consisting of a hollow PET body of standard dimensions in which the neck of the bottle and its thread have already been shaped, into the finished product. Depending on the type of mould used it is possible to produce bottles of different shapes and sizes.

Known blowing machines with linear transport systems consist essentially of five parts:
- a preform feeding and transporting zone;
- one or more preheating zones consisting of a series of heating lamps in front of which the preforms are passed, rotating about themselves as they do so;
- a blowing zone consisting of a plurality of moulds (with an automatic opening system and a cooling system) and a plurality of high-pressure pneumatic blowers; and
- a finished-bottle discharge zone.

Between the final heating zone and the blowing zone, a linear transport system is sometimes interposed. The latter is made up of both an acceleration device, which serves to create the separation between the plurality of incoming preforms and the preforms moving on for the blowing stage, and a handling device having a plurality of gripping forks. In this way the speed of the preforms in the heating stage is made constant but is independent of the movement in the blowing stage.

In the zone where the preforms are transferred to the blowing moulds this linear transport system employs movements on a transverse axis (to engage the incoming preforms) and on a longitudinal axis to the direction of entry into the blowing zone, as will be explained below.

The distance between the axes of the gripping forks is dictated by the distance between the axes of the blowing moulds. In turn the distance between the moulds is dictated by the greatest size of bottle to be produced.

This is because the moulds are interchangeable and can be of the most disparate dimensions, in order to produce bottles with diameters that are normally between approximately 50 and 130 mm. As designed, the machine functions, from the entry of the preforms to the exit of the bottles, by maintaining a pitch at which bottles of the maximum diameter can be produced.

This type of design has major disadvantages.

In the first place, since there is a maximum distance fixed between the gripping forks throughout the transport system, the preforms, which are small (approximately 35 mm diameter), are widely separated from one another. The preheating zone must therefore be extra large because the lamps must provide continuous cover of the whole heating area, including the space between one preform and the next, in order to maintain a constant temperature through the preheating zone. This causes a large energy output. In this way the total size of the preheating zone is clearly going to be greater, causing an increase in the overall cost of the installation and a greater size of the machine as a whole.

A second disadvantage in using a blowing machine of the type described is that if small bottles are to be produced it is impossible to increase the number of moulds in the blowing zone, even though this would be extremely useful in order to increase the throughput of the installation as the smaller moulds could be arranged closer together; but this would mean they are incorrectly positioned for the preforms, which as we have seen arrive at the greatest possible distance.

European Patent EP 0 617 691 B1 (Jean Gallay) describes a linear transport system which partly solves the problems enumerated above. The holders, which are the components to which the preforms are attached as they are fed in and which guide their progress through the entire production cycle are moved in groups of three transversely to the direction of arrival of the preforms in order to engage with separating devices which separate the preforms to the desired interaxial distance. The now separated preforms are then taken by a transport mechanism that moves along a transverse and a longitudinal axes. This transport mechanism comprises a first gripping comb with three gripping forks for the preforms arranged at a fixed distance equal to the distance to which the preforms were separated in the preceding stage. By its transverse movement the said transport mechanism engages with the incoming preforms, and by its longitudinal movement it moves them through the blowing zone. At the same time a second gripping comb engages with and moves the already blown bottles towards the discharge zone.

Although the transport system described above solves the problem of separating the preforms to a desired distance, and these therefore can arrive at the shortest possible distance, it nonetheless has certain disadvantages.

In the first place it is complicated, requiring three separate mechanisms: a mechanism for transferring the three incoming preforms transversely onto the track leading into the blowing zone; a mechanism for separating the individual preforms to the desired distance; and a mechanism for transporting the three separate preforms through the blowing zone and transferring them to the discharge zone. The fact that the preform feed system and the above-described system of separating and transporting them through the blowing zone are not in line is another constructional disadvantage of this device of the prior art.

In the second place, the three separate mechanisms for moving the preforms require a process with three distinct stages, which places limits on the productivity of the installation.

The problem which the present invention addresses is that of providing a blowing machine that overcomes the disadvantages discussed above, in particular a machine in which cost, dimensions and productivity are optimized and in which the energy consumption in the preheating zone is minimized.

This problem is solved by a linear transport system for objects, comprising a bracket that is movable both in a transverse direction and a longitudinal direction with respect to the direction of arrival of the said objects, characterized in that the said bracket supports a plurality of movable gripping forks and in that the said transport system comprises means for moving the said gripping forks individually and/or with a mutual action so as to vary the distance between their axes.

The present invention also relates to a process for transporting objects from a first position, in which the said objects are at a first interaxial distance from each other, to a second position, in which the said objects are at a second interaxial distance from each other, the said second interaxial distance being different from the said first interaxial distance, the process being characterized in that the said objects are simultaneously subjected to longitudinal motion from the said first position to the said second position and to a motion that changes their interaxial distance from each other.

Other features and advantages of the linear transport system of the present invention will become clear in the description of an example of an embodiment given below by way of nonrestrictive indication with reference to the following figures:
Figure 1 is a diagrammatic plan view of an installation for producing bottles in PET according to the present invention;
Figure 2 is a perspective view of one embodiment of the preform transport system according to the present invention;
Figure 3 is a sectional view in the direction A1 as marked in Figure 2;
Figure 4 is a transverse view in partial section of the detail of the support and the slides on which the gripping forks are mounted in a second embodiment of the present invention;
Figure 4a is a view in direction A2 as marked in Figure 4;
Figure 5 is a transverse view in partial section of the details of the support and the slides on which the gripping forks are mounted in a third embodiment of the present invention;
Figure 5a is a view in direction A3 as marked in Figure 5;
Figure 6 is a transverse view of the detail of a pantograph separating system for separating the slides on which the gripping forks are mounted, in a fourth embodiment of the present invention;
Figure 6a is a plan view of the pantograph system of Figure 6, showing the pairing of two adjacent pantographs; and
Figure 7 is a transverse view of a slide separating system using pneumatic actuators in series, in a fifth embodiment of the present invention.

With reference to the figures, the bottle blowing machine according to the present invention comprises a closed-circuit production line in which the holders carrying the preforms travel on two tracks and in which the motion is provided by a system of a motor and belts situated at one or more points of the production line, which pushes the holders by friction one by one, in such a way that each holder pushes along the next one with which it is in contact.

The machine depicted comprises:
- a preform feed zone A in which the individual preforms engage with their respective holders,
- one or more preform propulsion zones B in which a belt or chain driven by a motor provides the frictional drive to the holders as it comes in contact with each of them,
- one or more preform preheating zones C, each of which comprises a plurality of lamps arranged in series and a pair of opposing chains driven at different speeds. These chains are intended to engage with a gearwheel present on each holder so that the holder travels along the track and between the two chains. The function of these chains is to rotate the holders about themselves in the preheating zone so that they receive an even distribution of the heat, and at the same time to advance them towards the next station;
- a preform blowing zone F comprising a plurality of moulds and a plurality of high-pressure pneumatic blowers,
- a finished-bottle discharge zone G comprising means for separating bottles from their holders;
- optionally, an exit belt H with tracks for discharging the finished bottles;
- optionally, a system D for accelerating a group of holders (or preforms) as they leave the preheating zone, in order to create a separation between them and the continuously arriving holders, and
- a system E for transporting the group of holders (or preforms) through the blowing and finished-bottle discharging zones, this system comprising the mechanism of relative separation of the individual holders according to the present invention.

The holders preferably comprise a plate of circular form intended to travel along the two tracks present on the line of transport. Fixed coaxially to the said circular plate are a gearwheel, which protrudes upwards by means of a cylindrical connector, and means of engaging the preforms, which protrude downwards.

In the bottle blowing machine according to the present invention the holders are placed in contact with each other all the way around the line of transport except when in the blowing zone. Furthermore, the diameter of the base of each holder is such as to ensure an interaxial distance between the preforms approximately equal to the shortest possible distance between the axes of the moulds at the blowing stage, which in turn is equal to the shortest distance between the smallest-diameter bottles which it is intended to produce. In particular, the distance between the axes of the preforms will be between 35 and 60 mm.

The present invention provides a transport system E with advantageous characteristics compared with the known systems of the prior art.

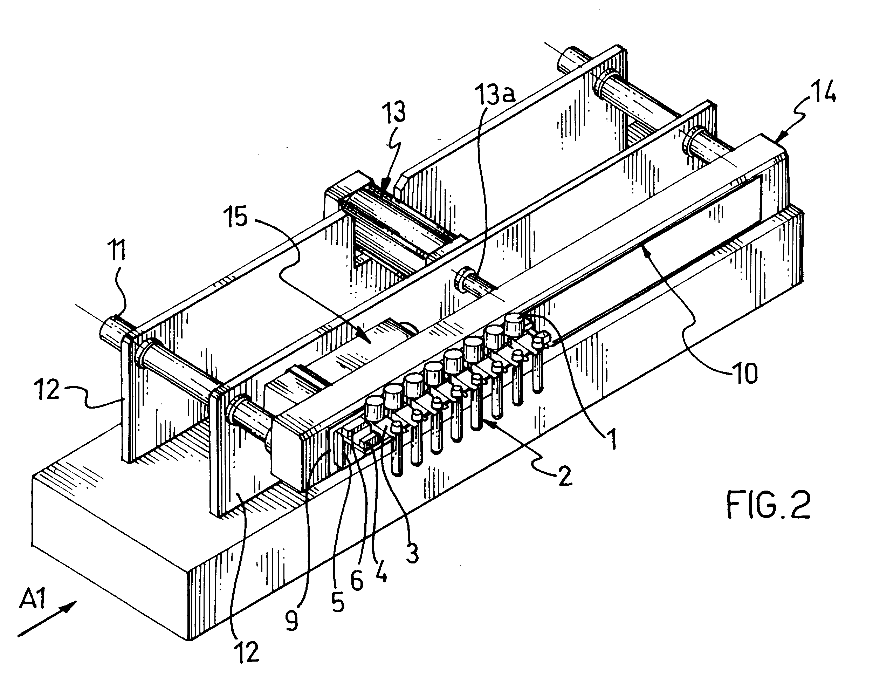

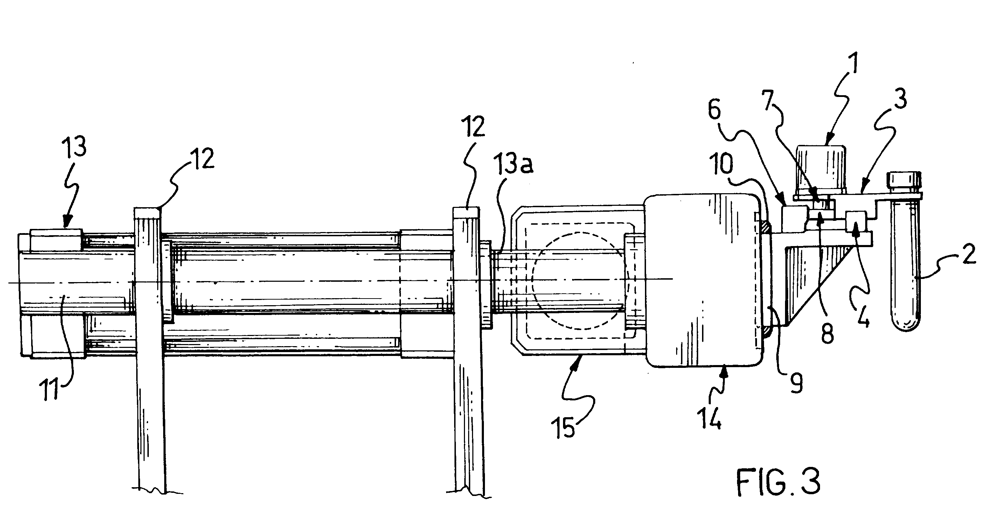

With particular reference to Figures 2 and 3, the automatic transport system in a first embodiment of the present invention comprises a bracket 5 with an L-shaped section having a vertical side and a horizontal upper side. Mounted on the said horizontal upper side are a rack 6 and a track 4 that extend all the way along the bracket 5.

The said guide 4 supports a number of movable gripping forks 3. The number of gripping forks will be twice the maximum number of moulds that can be contained in the blowing zone. This is because the system is designed to transport one group of holders through the blowing zone while simultaneously removing from the same zone a group of finished bottles.

Each of said gripping forks 3 is formed by a rectangular plate, of which one end protrudes transversely from the bracket 5 and contains an appropriately shaped cutout or recess to engage with the holder 2 which is carrying a preform, or possibly with the preform itself. More specifically, this cutout or recess will be semicircular so as to engage with the cylindrical connector present on the upper end of the holder 2.

On the underside of the gripping fork 3 are two ribs separated by a distance approximately equal to the width of the track 4 so as to form an inverted U means able to slide along the track 4.

A motor 1 is fixed on the upper surface of the rectangular plate of the said gripping fork 3, at the opposite end from the end designed to hold the holder and extending towards the rack 6. This motor 1 is preferably a stepper motor combining compact size with very precise movement. However, other types of motor can also be used, such as linear or brushless motors, for example.

The said rectangular plate contains a through hole beneath the motor 1 for the drive shaft 7 of the said motor 1 to pass through the plate and protrude beneath it. The lower end of the said drive shaft 7 comprises a gearwheel 8 which meshes with the rack 6.

The bracket 5 is fixed to a base 9 which moves by means of a pair of tracks 10: the latter are fixed to a structure 14 and run along its full length. These tracks 10 enable the bracket 5 to move along the longitudinal axis of the structure 14. This longitudinal movement of the bracket 5 and of the base 9 is effected by a linear actuator (not shown) connected to a motor 15 which is also fixed to the structure 14.

The structure 14 in turn is supported movably on a pair of supporting means 12 by means of guides 11 which run transversely relative to the axis in which the preforms are fed through the blowing zone. Movement in the transverse direction of the structure 14, and therefore of the bracket 5, is produced by a piston 13 rigidly fixed on the supporting means 12 and connected to the structure 14 via the shaft 13a.

The base 9 is at least twice as long as the blowing zone, for reasons which will become clear in the later description of the operation of the transport system.

Numerous variants of the linear transport system of the present invention are of course possible, especially as regards the means used to move the gripping forks independently and/or with a mutual action on the bracket 5.

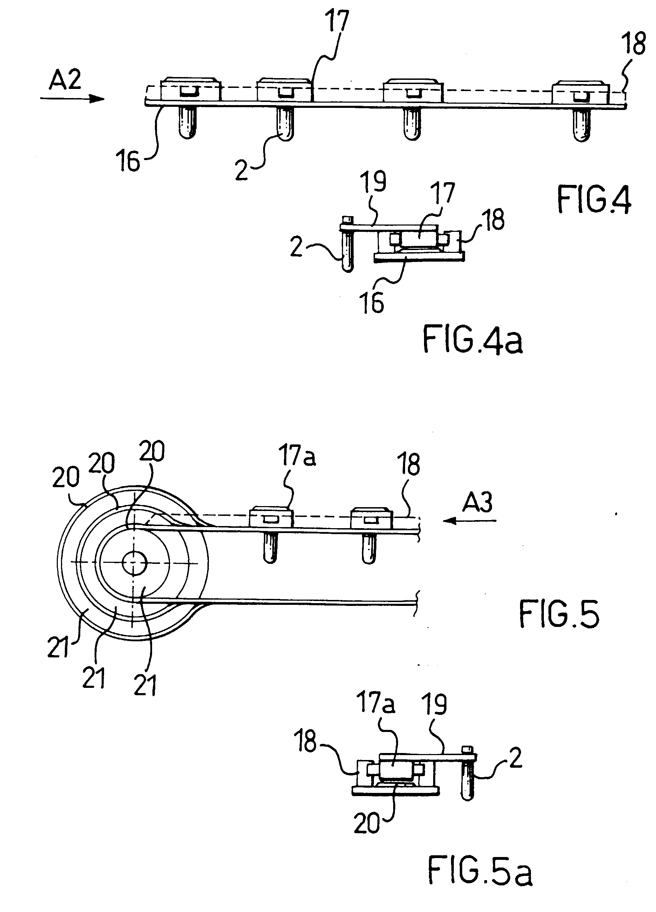

For example, in a first variant (referring to Figures 4 and 4a), servoassisted electromagnets 17 are moved along a pair of tracks 18 on a fixed magnetic base 16. Gripping forks 19 are fixed to each of the said electromagnets in order to engage either directly with the preforms 2 or with the holders, as described earlier. The movement of each individual electromagnet 17 is independent and controlled by a control unit. In this way it is possible to position the preforms 2 at any desired interaxial distance.

In a second variant (referring to Figures 5 and 5a), a plurality of slides 17a, on each of which is fixed one gripping fork 19, are supported movably on a pair of tracks 18. Each of the said slides 17a is in engagement with an independent drive chain or belt 20. Each of the said chains or belts 20 is driven by a corresponding sprocket 21. The said sprockets 21 each have a different number of teeth and are fixed coaxially to a shaft driven a single motor. By means of the simultaneous rotation of the said sprockets 21, the slides 17a are advanced. The distance they advance is different for each slide 17a and depends on the ratio between the pitch circle diameters of the sprockets 21.

The system provides a simultaneous movement and relative separation of the gripping forks 19 to a predetermined interaxial distance. To vary this interaxial distance, the angle of rotation of the sprockets 21 must be varied.

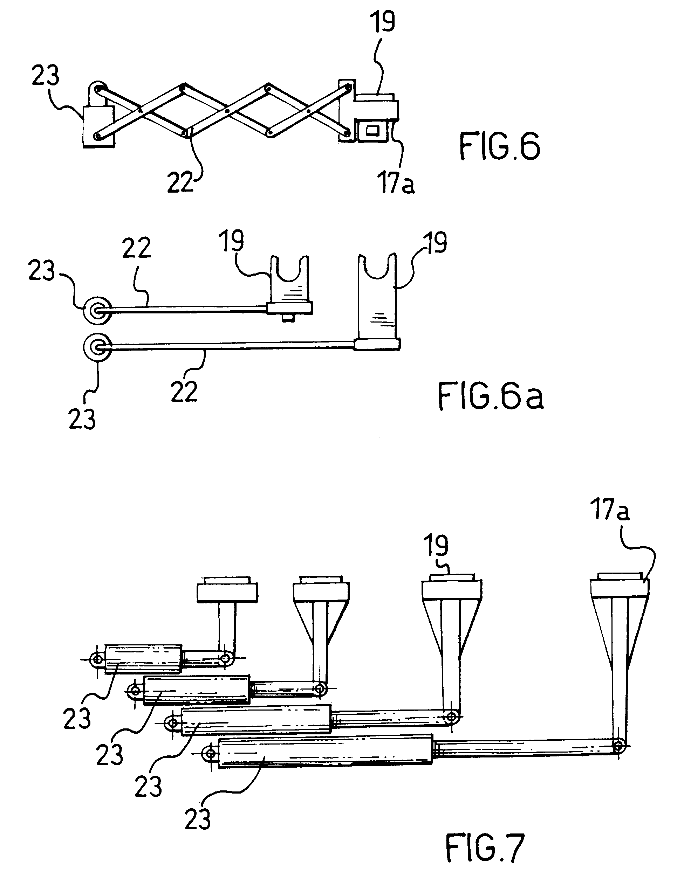

In a third variant (referring to Figures 6 and 6a), each slide 17a on which a gripping fork 19 is fixed is supported movably on a pair of tracks 18 and is connected to a pantograph system 22. The said pantograph systems 22, one for each slide 17a, are mounted parallel to each other and are moved by a pneumatic, electric or hydraulic actuator 23 which provides the individual movement for each of the said slides 17a. The pantograph systems 22 are built so as to vary the distance between the individual forks 19 to a predetermined interaxial distance.

In a fourth variant (referring to Figure 7), the slides 17a - on which the forks 19 are fixed and which are supported movably on the tracks 18 - are directly connected to pneumatic, hydraulic or electric actuators 23 which provide the individual and simultaneous movement of the separate slides, in such a way as to create the desired interaxial distance between these.

Still referring to the figures, the operation of the transport system according to the present invention will now be described.

The preforms exiting from the last preheating zone C are fed continuously to the succeeding blowing zone. Because the blowing stage is a discontinuous operation requiring an approximately 3 second dwell time of the preforms in the moulds, it will obviously be useful to introduce a stage of acceleration of the incoming preforms in order to create the necessary separation between a group of preforms entering the blowing zone, and the next group which in the meantime is emerging continuously from the preheating zone.

What is more, the preforms are at the shortest possible interaxial distance, as given by the diameter of the holders. As already stated, this constitutes an advantageous feature of the present invention in the sense that it will be possible to construct the preheating zone in such a way as to have the smallest possible number of lamps. This will be an undoubted advantage in terms of construction and energy consumption.

If it is wished to produce intermediate or large sizes of bottles which do not therefore correspond to the shortest interaxial distance of the incoming preforms, it will therefore be necessary to separate the holders from each other to match the distance between the moulds inside the blowing zone. The advantage of the transport system of the present invention is that this process of separating the holders takes place simultaneously with the transfer of a group of holders from the preheating zone to the blowing zone, thereby minimizing the time spent on completing the entire operation. This procedure results in a great advantage in terms of productivity.

In the scenario in which the blowing zone comprises five moulds for the production of bottles of intermediate or large sizes, only ten gripping forks 3 will be activated, five to feed the incoming preforms and five to remove the finished bottles, while the remaining forks will be placed in a nonworking position on the bracket 5, that is to say in a zone of the bracket 5 that is not intended to be introduced into the blowing zone. The two groups of five gripping forks 3 will be so positioned as to correspond to the preform gripping position and the finished bottle gripping position. A possible variant is for the bracket 5 to comprise only five gripping forks 3 for holding the incoming preforms, in which case the transport system will need a comb with gripping forks set at a fixed distance corresponding to the distance between the moulds in the blowing zone. This gripping comb, as described previously with reference to the devices of the prior art, must move with the bracket 5 and with the structure 14 so that the gripping and discharging of the finished bottles takes place at the same time as the mobile gripping forks 3 are gripping and transporting the preforms through the said blowing zone. This gripping comb must also be interchangeable, or capable of being modified in such a way as to vary the distance between the forks, in order to be adaptable to the different shapes of moulds for the production of bottles of small, intermediate or large sizes.

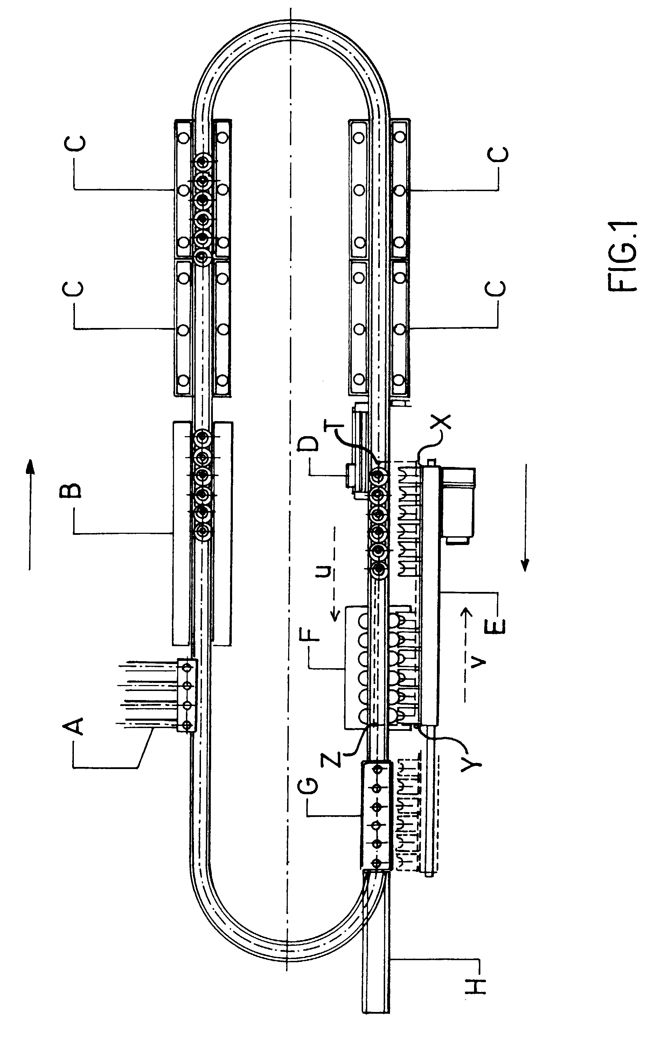

Returning to the operation of the transport system according to the present invention, in the first stage, referred to as the preform gripping stage, the gripping forks 3 are initially in a rest position corresponding to the position X in Figure 1 and are situated at the shortest possible distance from each other. At the same time the five gripping forks 3 for gripping the finished bottles are in position Y and are separated from each other by a distance equal to the distance between the axes of the moulds in the blowing zone.

The piston 13 now slides the structure 14 into the gripping position. In this way the first five gripping forks 3 reach position T and engage with the group of five incoming holders, the latter having been brought to this position by the acceleration system D. The second five gripping forks 3 on the other hand are in position Z and engage with the five holders carrying the finished bottles.

In the second stage, referred to as the transport stage, the longitudinal actuator (not shown) of the base 9 moves the said base 9, and therefore the bracket 5, in direction u. At the same time the motors 1 separate the five gripping forks from each other until they reach the interaxial distance required in the blowing zone (equal to the interaxial distance of the moulds).

The mutual separation occurs in the following manner. The motor 1 transmits a rotary motion to the drive shaft 7 and to the gearwheel 8 which is in mesh with the rack 6. The gripping fork 3 therefore moves along the track 4 until it reaches the desired position. The distance created between the axes of the gripping forks 3 is a function of the speed of rotation of the motor 1 and of the length of time for which the motor 1 is operated. Because the operation must be concluded in the very short time necessary for the bracket 5 to move from its initial position to its final position, the speed of rotation of the motor of each gripping fork must be a multiple of the speed of the motor of the previous gripping fork in order to create simultaneously the separation between the individual gripping forks. The process is controlled electronically by a control system (PC or PLC) which calculates instantaneously the necessary travel in relation to the minimum distance of the incoming preforms and the distance of the moulds, and controls the movement of the motors 1 accordingly.

The movement of the bracket 5 along direction u causes the first group of five gripping forks 3, carrying their preforms, to move from position T to position Z, where the said gripping forks will be at the same interaxial distance as the moulds, as described above. Conversely the second group of five gripping forks 3, carrying the finished bottles, moves from position Z to a discharging position corresponding to zone G.

In the third stage of the process, referred to as the release stage, the piston 13 retracts the structure 14 so as to disengage the holders. In this way the first five gripping forks 3 move from position Z to position Y, while the second five gripping forks move from the discharging position in zone G to a retracted position (not shown). At this point the moulds are closed around the five preforms in the blowing zone F and blowing is carried out by the high-pressure pneumatic blowers. At the same time the five holders released from the finished bottles in the discharge zone G are recycled to the feed zone A by a transport mechanism situated in the said zone G and similar to those described with reference to zones B.

In the fourth and last stage of the process, referred to as the reset stage, the bracket 5 is moved along direction v by the longitudinal actuator (not shown). The first group of five gripping forks 3 thus moves from the position Y to the rest position X and, simultaneously, the motors 1 reset the shortest possible distance between the gripping forks 3, by a similar but opposite mechanism to that used for separating them in the transport stage. In this way the first group of gripping forks 3 is ready to restart the above-described cycle of gripping and transporting the incoming holders.

During the resetting stage, moreover, the second group of gripping forks 3 moves from the retracted position in the discharge zone G to position Y. It should be observed that the distance between the individual gripping forks of this second group of forks has not changed throughout the process. It is therefore important that this distance can be adjusted if it is wished to vary the number of moulds (and hence the distance between their respective axes) in the blowing zone, in order that the system is as versatile as possible.

From the description given above of both the transport system according to the present invention and its operation, it is obvious that the preforms can in this way be taken at any distance from each other and can therefore be moved into the moulds positioned in the most suitable way, thus optimizing not only the size of the heating zone but also the number of moulds, and consequently the maximum productivity of the machine. Furthermore the particular feature of this transport system, which enables the individual preforms to be separated at the same time as they are being transported into the blowing zone, further increases the productivity of the installation by minimizing the amount of unproductive time.

Lastly, the ability to move the gripping forks 3 independently of one another increases the versatility of this transport system.

It will be obvious that the embodiments that have been described are only certain particular embodiments of the linear transport system of the present invention, to which those skilled in the art will be able to make all such modifications as may be necessary to adapt it to particular applications, without thereby moving outside the scope of protection of the present invention.

For instance, the present transport system can be adapted to machines for filling the bottles or other types of container, in which there are similar problems to do with the diverse shapes and sizes of the containers to be filled.

In a similar way the transport system according to the present invention can be adapted to transport objects of many different shapes and types, for all those applications in which it is necessary to vary the distance between these objects during the various stages of their processing.

## Claims

1. System of linear transport for objects, comprising a bracket (5) that is movable both in a transverse direction and a longitudinal direction with respect to the direction of arrival of the said objects, characterized in that the said bracket (5) supports a plurality of movable gripping forks (3; 19) and in that the said transport system comprises means for moving the said gripping forks (3; 19) individually and/or with a mutual action so as to vary the distance between their axes.

2. Linear transport system according to Claim 1, in which the said bracket (5) is supported movably on a structure (14) so that the said bracket (5) can move longitudinally, and in which the said structure (14) is in turn supported movably on supporting means (12) so that the said bracket (5) can move transversely.

3. Linear transport system according to Claim 2, in which the said longitudinal movement of the said bracket (5) is executed by a linear actuator fixed to the said structure (14) and in which the said transverse movement of the said structure (14) is executed by a piston (13).

4. Linear transport system according to Claims 1 to 3, in which a motor (1) is fixed to each of the said gripping forks (3) for the individual movement of the said gripping forks (3).

5. Linear transport system according to Claims 1 to 3, in which each gripping fork (19) is fixed to a servoassisted electromagnet (17) supported movably on a fixed magnetic base (16), the said linear transport system also comprising a control unit.

6. Linear transport system according to Claims 1 to 3, in which each gripping fork (19) is fixed to a slide (17a) supported movably on a pair of tracks (18), and in which each slide (17a) is in engagement with a drive chain or belt (20), the said chains or belts (20) being driven by sprockets (21) each having a different number of teeth and being fixed coaxially to a shaft driven by a motor.

7. Linear transport system according to Claims 1 to 3, in which each gripping fork (19) is fixed to a slide (17a) supported movably on a pair of tracks (18), and in which each slide (17a) is connected to a pantograph system (22), the said pantograph systems (22) being mounted parallel to each other and being moved by an actuator (23).

8. Linear transport system according to Claims 1 to 3, in which each gripping fork (19) is fixed to a slide (17a) supported movably on a pair of tracks (18), and in which each slide (17a) is directly connected to an actuator (23).

9. Linear transport system according to Claims 1 to 3, in which the said bracket (5) has an L-shaped section, having a vertical side and a horizontal upper side, with a rack (6) and a track (4) being mounted on the said horizontal upper side, and in which the said gripping forks (3) are each formed by a rectangular plate, one end of which contains a recess for engaging with the said objects, while the motor (1) is fixed on the opposite end of the said plate, the said motor (1) being in engagement with the rack (6) through a gearwheel (8), and in which an inverted U means able to slide along the said track (4) is formed on the underside of the said gripping fork (3).

10. Linear transport system according to Claims 1 to 9, in which the said objects are preforms (2) for blowing into bottles.

11. Linear transport system according to Claims 1 to 9, in which the said objects are holders able to engage the preforms (2).

12. Machine for blowing bottles from a thermoplastic material and comprising:
- a preform feed zone;
- one or more preform propulsion zones;
- one or more preform preheating zones;
- a preform blowing zone;
- a finished-bottle discharge zone; and
- a system for transporting a group of preforms through the blowing zone and finished-bottle discharge zones,
characterized in that the said transport system is constructed in accordance with Claims 1 to 11.

13. Process for transporting objects from a first position (T), in which the said objects are at a first interaxial distance from each other, to a second position (Z), in which the said objects are at a second interaxial distance from each other, the said second interaxial distance being different from the said first interaxial distance, the process being characterized in that the said objects are simultaneously subjected to longitudinal motion from the said first position (T) to the said second position (Z) and to a motion that changes their interaxial distance from each other.

14. Process according to Claim 13, in which the said motion that changes the interaxial distance of the said objects from each other is applied independently to each of the said objects.

15. Process according to Claim 13 or 14, in which the said first position (T) and the said second position (Z) correspond to two different work stations in an in-line operation.

16. Process according to Claim 15, in which the said operation comprises blowing bottles from PET.

17. Process according to Claims 13 to 16, comprising a stage in which an incoming group of the said objects is accelerated up to the said first position (T).
